# EUROPEAN PATENT SPECIFICATION

(11) **EP 3 032 144 B1**
(45) Date of publication and mention of the grant of the patent: **16.10.2019**
(21) Application number: 14197305.7
(22) Date of filing: 11.12.2014
(51) Int. Cl.: F16H 59/10, F16H 61/22

(54) **GEAR SHIFTER ASSEMBLY**
Gangschaltungsanordnung
Ensemble sélecteur de vitesse

(43) Date of publication of application: 15.06.2016
(73) Proprietor: Kongsberg Automotive AB, 565 33 Mullsjö (SE)
(72) Inventor: Fredriksson, Robert, 55314 Jönköping (SE); Jonsson, Andreas, 56140 Huskvarna (SE)
(74) Representative: Uexküll & Stolberg

(56) References cited:
- DE-A1-102007 058 850
- DE-A1-102009 000 640
- US-A1- 2005 223 835
- US-A1- 2009 217 782

## Description

The present invention relates to a gear shifter assembly for a vehicle comprising: a base to be fixed in a vehicle, a shifter yoke having the shape of a disk segment and being mounted in the base to be pivotable about a pivotal axis and comprising a cable connector at a distance to its pivotal axis for connection of a cable to transfer pivotal shifter yoke movements to a transmission, a shift lever connected to the shifter yoke to pivot the shifter yoke along a shift gate, a locking arm arrangement pivotably mounted to the base and adapted to cooperate with lock surface structures on the shifter yoke such that the locking arm arrangement abuts against a lock surface structure to block pivotal movement of the shifter yoke at a predetermined pivotal position when the locking arm arrangement is in a locking position, and that, when the locking arm arrangement is in an unlocking position pivoted away from the lock surface structure, the locking arm arrangement is free to pass the lock surface structure to thereby allow pivotal movement of the shifter yoke, a bias device acting on the locking arm arrangement urging it to one of the locking and unlocking positions, a solenoid actuator adapted to move the locking arm arrangement to the other one of the locking and unlocking positions when the solenoid actuator is activated.

Such a gear shifter assembly is disclosed in US 2005/0223835 A1. The gear shifter assembly has a base which is adapted to be fixed to the vehicle, for example on a floor or on a console of the vehicle. A shifter yoke is mounted on the base in a pivotal bearing. The shifter yoke is provided with a cable connection to which an end of a cable can be connected, which cable is extending to a transmission of the vehicle. Pivotal movements of the shifter yoke are transmitted by longitudinal movements of the cable to the transmission. A shifter lever is connected to the shifter yoke so that a driver can operate the gear shift assembly by pivoting the shifter lever along a shift gate. The shifter yoke is generally "pie shaped", or in other words, has the shape of a disk segment. The pivotal axis of the shifter yoke coincides with the central axis of the disk segment, i.e. the central axis of a circular disk complementing the disk segment. The outer periphery of the shifter yoke is therefore formed by an arcuate edge which has a centre of curvature at or near the pivotal axis. In the outer periphery of the shifter yoke a sequence of grooves is formed which correspond to a sequence of gear or operational positions along which the shifter assembly can be shifted to change to a desired state of the transmission of the vehicle. The grooves can indicate positions such as park (P), reverse (R), neutral (N) and drive (D). The sequence of grooves forms a locking surface structure. A locking arm arrangement is provided by a pivotable locking arm mounted on the base and extending with its end opposite to the mounting to the periphery of the shifter yoke. This end of the locking arm is provided with a transverse pin which is dimensioned such that it can be received in any of the grooves of the sequence of grooves on the outer periphery of the shifter yoke. The locking arm is urged with its end carrying the pin against the outer periphery of the shifter yoke such that the pin of the locking arm will remain in a groove once it has been received therein to lock the shifter gate in a position corresponding to a particular gear.

A solenoid actuator is provided which is connected to the locking arm. The solenoid actuator can be activated to pivot the locking arm such that its end carrying the pin is pivoted in a direction away from the outer periphery of the shifter yoke. In this manner the locking arm can be unlocked from the locking surface structure on the outer periphery of the shifter yoke, whereafter the shifter yoke is free to be pivoted with the shift lever to a new gear. Then the solenoid actuator is deactivated such that the shifter yoke is locked by the locking arm in the position of the new gear. The shifter yoke is in addition provided with a detent profile which provides a feeling that the shift lever snaps in or engages in the new position.

Document US 2009/0217782 A1 discloses a very similar shifter assembly to which the above description with respect to US 2005/0223835 A1 likewise applies. There is a single locking arm carrying a gate pawl selectively engaging one of the grooves in the periphery of the shifter yoke for positively locking the shifter yoke. Besides the locking arm there is a detent lever which is urged onto a detent track formed on the shifter yoke, and which is moved along the detent track when the shifter yoke is pivoted. By moving along the detent track the detent lever generates a tactile feedback for the operator.

In order to avoid inadvertent movement of the shift lever it is furthermore known to provide locking features for certain positions. For example, to avoid inadvertent movement of the shift lever out of the park position P, the shift lever assembly may include a solenoid driven locking mechanism which locks the shift lever in the P position, i.e. blocks movement to the R position. To unlock the P lock the operator must typically turn the ignition and depress the brake pedal.

Furthermore, in order to avoid inadvertent movement of the shifter lever from P to R or D to R it is known to include purely mechanical detent structure interfacing with a lock bar carried by the shift lever, which lock bar is lifted/lowered in response to the actuation of a button provided on a knob of the shift lever. In this case the operator, if a gear change to the R position is desired, has to press the button which disengages the lock bar from the detent structure and allows movement of the shift lever to the R position.

The above described gear shifter assemblies with a sequence of grooves on the periphery of the shifter yoke and a solenoid actuated locking lever, which allows locking of the shifter lever in any gear position, has certain disadvantages. The engagement of the locking arm with a desired one in the sequence of grooves on the outer periphery of the shifter yoke requires a precise positioning of the shifter yoke with respect to the pin of the locking arm which is to be received in the corresponding groove. Since the pin received in the groove is intended to provide a locking free of slack, also the dimensions of the pin and the groove have to be precisely matched to each other. Furthermore, the locking arm has to be mounted in a pivotal bearing which is able to withstand loads in both opposite movement directions of the shifter yoke when the operator attempts to pivot the shifter lever forward or rearward although the shifter yoke is locked by the locking arm.

It is an object of the present invention to provide a gear shifter assembly capable of blocking shift movement of the shift lever to or out of predetermined shift positions without high demands on tolerances of the locking components.

This object is achieved by a gear shifter assembly comprising the features of claim 1. Preferred embodiments of the invention are set out in the dependent claims.

According to the present invention the solenoid actuator comprises a first solenoid actuator and a second solenoid actuator. The locking arm arrangement comprises a first locking arm and a second locking arm, the first locking arm and the second locking arm being pivotably mounted to the base, which first locking arm and second locking arm are moveable by the first and the second solenoid, respectively, wherein when said first solenoid actuator is activated, the first locking arm is in its unlocking position, and wherein when said second solenoid actuator is activated, the second locking arm is in its unlocking position. The first locking arm and the second locking arm cooperate with a first lock surface and a second lock surface, respectively, on the shifter yoke. The first locking arm and the first lock surface are arranged to, when the first locking arm is in the locking position and when the shifter yoke is in a first predetermined pivotal position, block pivotal movement of the shifter yoke in a first direction only. In other words the first locking arm and the first lock surface block shift lever movement in a first direction to a particular gear position but leave the moveability of the shifter yoke in the opposite direction unrestricted. In the same manner, the second locking arm and the second lock surface are arranged to, when the second locking arm is in the locking position and when the shifter yoke is in a second predetermined pivotal position, block pivoting of the shifter yoke in a second direction only, which second direction is opposite to first direction.

In this arrangement there is no more need for a positive mechanical engagement of the locking components, i.e. there is no need for a lock element and an exactly complementary lock recess which require high precision of the components and of their relative positions. Instead, the lock surface can be provided by a single surface as the front surface of a projection on the outer periphery of the shifter yoke, and the locking arm has to be pivoted to a level such that the end of the locking arm obstructs or blocks the way of the lock surface. This can be achieved without high demands on the precision of the locking arm and the lock surface and without need of precise control of their relative positioning.

In a preferred embodiment the first lock surface is formed by a projection on the outer periphery of the shifter yoke as a radially extending front surface of the projection, which front surface is extending in radial direction of the shifter yoke with respect to its pivotal axis. The first locking arm is pivotably mounted in the base in a first bearing at a radial distance greater than the radial distance of the projection from the pivotal axis of the shifter yoke such that the end of the first locking arm opposite to its pivotal mounting is abutting against the first lock surface when locking arm is in the locking position, and such that this end of the first locking arm is in the unlocking position pivoted radially further away from the pivotal axis of the shifter yoke such that the first lock surface may pass the first locking arm in the unlocking position.

Preferably in this case the first locking arm is extending in its locking position perpendicular to the first lock surface and parallel to a tangent on the periphery of the disk segment of the shifter yoke.

In a preferred embodiment the second locking arm is pivotably mounted in the base in a second bearing at a radial distance to the pivotal axis of the shifter yoke that is smaller than the radial distance of the periphery of the shifter yoke. The second locking arm extends into an open recess in a side surface of the shifter yoke. The recess is dimensioned such that the second locking arm is capable of pivoting over certain range within the recess. The side walls surrounding the open recess are provided with a projection forming the second lock surface extending in radial direction with respect to the pivotal axis of the shifter yoke. The second locking arm comprises an extended head at the end opposite to the second bearing, which extended head is arranged to be moved over the second lock surface at a predetermined pivotal shifter yoke position to block rotation of the shifter yoke in the second direction.

In a preferred embodiment the side walls of the recess are provided with a third lock surface which is arranged to cooperate with the head of the second locking arm when the second locking arm is in its unlocking position to block further rotation of the shifter yoke in the second direction at a third predetermined pivotal position of the shifter yoke. Such third lock surface has to be disposed at a side wall of the recess that is in radial direction with respect to the pivotal axis of the shifter yoke opposite to the second lock surface. In such arrangement the second locking arm can get into locking contact with the second lock surface when the second locking arm is in the locking position, and can get in locking contact with the third lock surface on the opposite side wall of the recess when the second locking arm is in the unlocking position pivoted away from the second lock surface.

Preferably the second locking surface is a radially extending surface of a transverse extension of the recess which is arranged to receive a projecting part of the head such that the projecting part of the head may move over the adjoining side wall of the extension of the recess to come into abutment therewith to block further rotation in the second direction. The opposite side wall of the extension is sufficiently far away from the head of the second locking arm so that there is no blocking or locking function in this gear position in the opposite first direction. The second locking arm extends in the locking position perpendicular to the second lock surface and parallel to a tangent on the periphery of the disk segment of the shifter yoke.

In a preferred embodiment the first bearing of the first locking arm and the second bearing of the second locking arm are disposed, when viewed from the pivotal axis of the shifter yoke, at polar angles with respect to the pivotal axis that differ by less than 15°. In principle, this means that both locking arms are disposed on the same side of the shifter yoke at about the same level which is a particularly compact arrangement. The first locking arm acts on first lock surfaces on projections on the outer periphery of the shifter yoke, whereas the second locking arm extends into an open recess in a side wall shifter yoke and acts on a second lock surface provided in the recess within the periphery of the shifter yoke.

In a preferred embodiment a bottom wall of the recess is provided with a projecting guiding track comprising a wall projecting to a height less than the side walls of the recess. The second locking arm is provided with an elastic pin extending towards the bottom wall of the recess into the area surrounded by the projecting guiding track. The projecting guiding track is arranged on the bottom wall of the recess such that the elastic pin contacts the projecting guiding track before the second locking arm reaches any portion of the side wall surrounding the recess in order to slow down movement of the second locking arm with respect to the side wall to damp the impact of the second locking arm on the side wall, in particular on the second lock surface. The elastic pin already contacts the projecting guiding track when there is still a gap between the second locking arm and an approaching side wall portion to avoid any sudden impact of the second locking arm on any part of the side wall surrounding the recess. In this way generation of vibrations and noise is greatly reduced.

In a preferred embodiment there are symmetrical recesses on both side surfaces of the disk segment of the shifter yoke. The second locking arm comprises two symmetrical locking arm portions connected by a shaft portion disposed outside of the recesses and the shifter yoke, which shaft portion is pivotably mounted in the second bearing in the base, wherein each locking arm portion extends into one of the recesses. This symmetrical arrangement with two locking arm portions and corresponding two second lock surfaces in the recesses increases the mechanical stability of the second locking arm.

In a preferred embodiment the first bearing is arranged to elastically yield within the base when a threshold torque exerted on the shifter yoke in the first direction is exceeded. A first overload protection support is disposed in the base such that the first locking arm abuts on and is supported by the first overload protection support when the first bearing yielded as a result of a torque in the first direction above the threshold torque. This overload protection support becomes effective if the driver tries to pull the shift lever and the shifter yoke out of the locked position while the second locking arm is in the locking position. Due to this arrangement the first bearing can be designed without high demands on mechanical strength and stiffness against deformation. For this reason the bearing can be made of relative cheap and easy to process materials such as plastic. Since the first locking arm has to support loads in a first direction only the first overload protection support can be placed at a well defined position in the base since the direction of the elastic yielding is predetermined by the first direction.

In a preferred embodiment the second bearing is likewise arranged to elastically yield within the base when a threshold torque exerted on the shifter yoke in the second direction is exceeded. A second overload protection support is disposed is the base such that the second locking arm abuts on and is supported by the second overload protection support when the second bearing yielded as a result of a torque in the second direction above the threshold torque.

In a preferred embodiment the projecting guiding track is provided with a guiding surface portion which pivots the second locking arm when the pin of the second locking arm is sliding along the guiding surface portion of the guiding track while the shifter yoke pivots between gear positions. This allows to support the movement of the second locking arm between locking and unlocking positions and vice versa as desired when moving to a particular gear position of the shifter yoke.

In a preferred embodiment the shift gate is a shift gate of an automatic transmission having a sequence of shift position P (park), R (reverse), N (neutral), D (drive), wherein the first lock surface comprises two first lock surfaces, one for blocking in the position R against rotation in the first direction to the P position, and one for blocking the shifter yoke in the N position against rotation in the first direction to the R position when the first locking arm is in the locking position.

In a further preferred embodiment the second lock surface is arranged to block the shifter yoke by the second locking arm in the position P against rotation in the second direction to the R position when the second locking arm is in the locking position, and a third lock surface for blocking the shifter yoke in the N position against rotation in the second direction to the D position when the second locking arm is in the unlocking position.

In a preferred embodiment the shift lever is mounted to be pivotable with respect to the shifter yoke about a second pivotal axis perpendicular to the first pivotal axis to move the shift lever from the automatic shift gate to a manual shift gate and vice versa, wherein the connection of the shift lever to the shifter yoke is such that the shift lever is in engagement with the shifter yoke to be able to pivot the shifter yoke by pivoting the shift lever when the shift lever is in the automatic shift gate, and is out of engagement with the shifter yoke when the shift lever is in the manual shift gate. The invention will in the following they described in connection with a preferred embodiment illustrated in the drawings in which:
Fig. 1 shows a perspective view of a gear shifter assembly with parts of the base broken away to make the interior thereof visible;
Fig. 2 shows an enlarged detail of Fig. 1;
Fig. 3 shows a perspective view of a portion of the shifter yoke of the preferred embodiment;
Fig. 4 shows a plan view of the portion of the shifter yoke shown in Fig. 4;
Fig. 5 shows a cross-sectional view of a part of the shifter yoke of the preferred embodiment;
Fig. 6 shows a further cross-sectional view taken at plane perpendicular to the cross-sectional plane of Fig. 5 showing parts of the shifter yoke and a second locking arm;
Figs. 7 to 10 show schematical views of a part of the shifter yoke and the second locking arm in a sequence of movement states of the shifter yoke and the second locking arm;
Figs. 11 to 16 show schematical views showing a first locking arm and the shifter yoke in a sequence of movement states; and
Figs. 17 to 25 show schematical views showing the first locking arm, the second locking arm and the shifter yoke in a sequence of movement states.

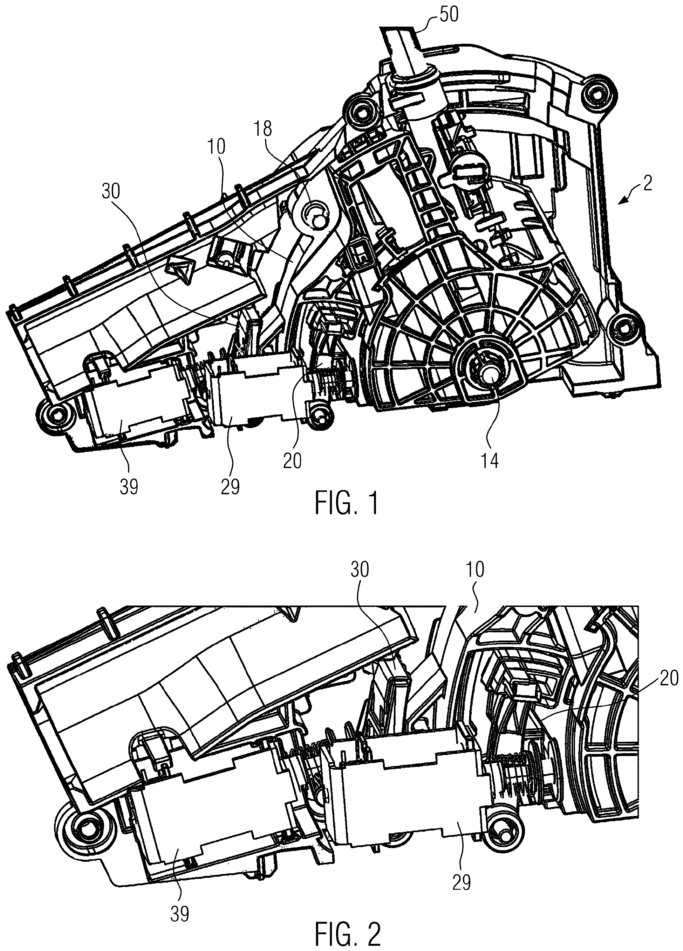

In the following we will first give an overview over the main components of the gear shifter assembly of a preferred embodiment in connection with Figs. 1 and 2. Fig. 1 shows a perspective view of the gear shifter assembly with the front parts of the base 2 broken away to show its interior and the components disposed therein. The base 2 which is to be fixed for example to the floor of a vehicle provides a housing, and in Fig. 1 the front half of the housing is broken away. Disposed within base 2 is shifter yoke 10 which is essentially "pie-shaped" or has the shape of a disk segment which is pivotably mounted by a pivot shaft 14, wherein the central axis of this pivot shaft 14 coincides with the centre of the disk segment. In the radially inner parts of the shifter yoke several radially extending and circumferentially extending enforcement ribs are visible. On the outer periphery the shifter yoke 10 has, at least along parts of the circumference, an accurate edge with a radius of curvature being centred on the central axis of the pivot shaft 14. Reference numerals 10 point to this accurate outer peripheral part of the shifter yoke.

A shift lever 50 is connected to the shifter yoke 10 and is in positive engagement therein so that the shifter yoke 10 may be pivoted about pivot shaft 14 by pivoting the shift lever 50. There are embodiments in which the shifter lever may also be pivoted in select direction about a second pivot axis perpendicular to the first pivot axis of pivot shaft 14 so that the shift lever 50 comes out of engagement with the shifter yoke 10 in at least one select position of the shift lever. However, in connection with the present invention this aspect is not relevant and only the situation will be considered in which the shift lever 50 is in positive mechanical engagement with the shifter yoke 10 so that they are moving together about the pivot shaft 14.

At a distance to the pivotal axis the shifter yoke 10 is provided with a cable connection 18. Cable connection 18 is adapted to be connected to an end portion of a cable which extends to a transmission. In this manner pivotal shift movements of the shifter yoke 10 are transferred to longitudinal movements of a cable connected to the cable connection 18, which cable is with its other end connected to an actuation component of the transmission.

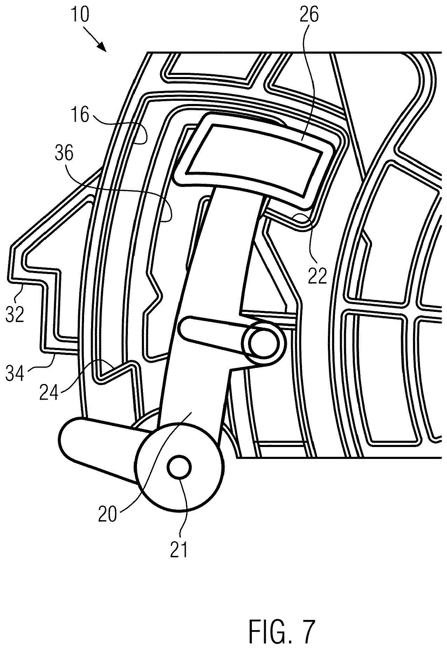

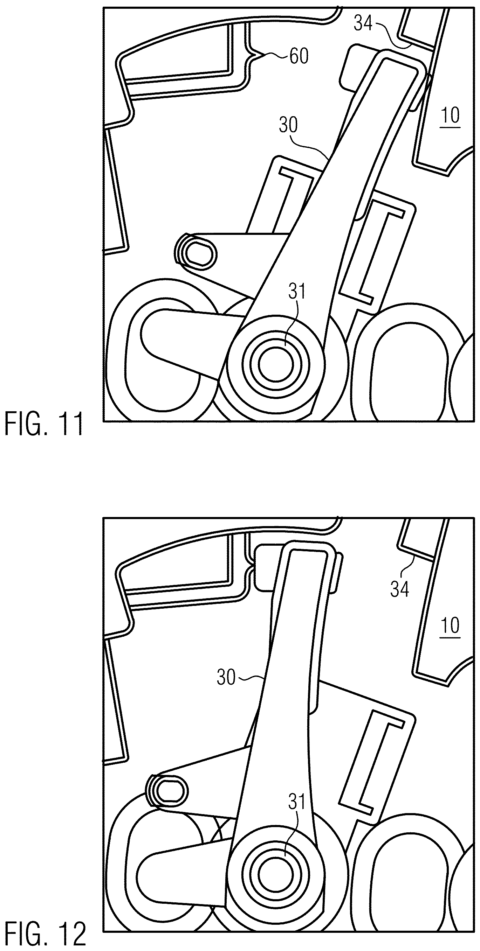

Such a shifter assembly with a shifter yoke 10 connected to a cable may for example be used to change the state of a transmission along a shift gate having the shift positions P (park), R (reverse), N (neutral) and D (drive) of an automatic transmission. For this application it is desired that the shifter assembly is locked in certain positions, and is unlocked under the control of a control unit only if certain conditions are fulfilled. For example, if the shifter yoke is in the position corresponding to P it should only be possible to shift the shifter yoke out of P when the brake pedal of the vehicle is pressed down. For these purposes of locking the shifter yoke in certain shift positions the present invention uses two pivotable locking arms, namely a first locking arm 30 and a second locking arm 20. The first locking arm 30 (see for example the schematical view in Fig. 11) is mounted in a first pivotal bearing 31 in the base, wherein this first pivotal bearing is located at a radial distance to the pivotal axis of the shifter yoke that is greater than the radius of the outer periphery of the shifter yoke 10. The first locking arm 30 is pivotable so that its outer end remote from the pivotal bearing may pivot towards or away from the outer periphery of the shifter yoke 10. The second locking arm 20 is mounted in a second pivotal bearing 21 (see for example Fig. Fig. 7) in the base, which second pivotal bearing is located at a radial distance to the pivotal axis of the shifter yoke 10 that is smaller than the radius of the outer periphery of the accurate portion of the shifter yoke 10. It will be described further below that the second locking arm 20 is extending into a recess formed in the side surface of the shifter yoke 10.

Referring again to Figs. 1 and 2 there is a first solenoid actuator 39 coupled with its actuator rod to an actuating arm connected to the first locking arm 30. When the first solenoid actuator 39 is activated, the first locking arm 30 is thereby pivoted away from the outer periphery of the shifter yoke 10, and is thus in its unlocking position. When the first solenoid actuator 39 is passive (not activated) the outer end of the first locking arm 30 is biased to be pivoted towards the outer periphery of the shifter yoke 10 and may come there into blocking engagement with first locking surfaces as will be described further below.

The second solenoid actuator 29 is coupled to the second locking arm 20. When the second solenoid actuator 29 is active the second locking arm 20 is thereby pivoted in a manner such that its enlarged head portion remote from its pivotal bearing is pivoted further away from the pivotal axis of the shifter yoke 10, and is thus in an unlocking position moved away from a second locking surface as will be described further below. When the second solenoid actuator 29 is passive the enlarged head portion of the second locking arm is biased to be pivoted towards the pivotal axis of the shifter yoke in which state it may come into blocking engagement with a second locking surface as will be described further below.

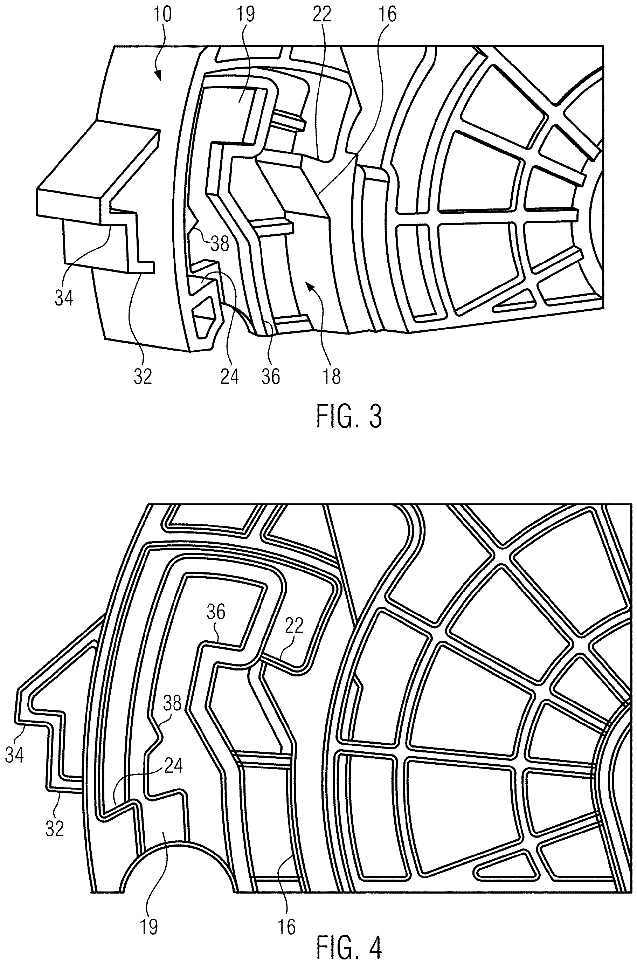

The design of the shifter yoke 10 in the area of the first and second locking arms will now be described in connection with Figs. 3 and 4 (in which the first and second locking arms are not shown). As shown in Figs. 3 and 4 the arcuate periphery of the shifter yoke 10 is provided with projections which define radially extending front surfaces 32 and 34. These front surfaces form two first locking surfaces 32, 34. These first locking surfaces will be referred to as first and second first locking surfaces 32, 34. They are arranged to cooperate with the first locking arm as will be described further below.

As can best be seen in Fig. 3 there is a recess 18 in the side surface of the shifter yoke 10. This recess 18 is surrounded by side walls 16. The recess 18 is open at its lower end and has a transverse extension at is opposite end in which transverse extension a radially extending second locking surface 22 is present.

On the bottom of the recess 18 there is a guiding track 36 which is formed by a projecting wall extending in a similar shape as the outer side walls 16 of the recess 18 but shifted with respect to the outer side walls 18 to the inside of the recess. In addition, the wall portions forming the guide track 36 have a lower projection height over the bottom 19 of the recess 18 than the side walls 16. As will be described in more detail further below this guide track 26 is adapted to cooperate with an elastic pin projecting from the second locking arm 20 to limit and guide certain movements of the second locking arm 20.

In the following the operation of the second locking arm 20 in cooperation with the recess 18 of the shifter yoke will be described in connection with Figs. 7 to 10 which show a sequence of movement states of the second locking arm 20 and the shifter yoke 10.

In Fig. 7 the shifter yoke 10 is in the P position of a P-R-N-D shift gate. The second locking arm 20 is in the locking position which in this embodiment means that the enlarged head portion 26 of the second locking arm 20 is received in the transverse extension of the recess such that a lower surface of the enlarged head portion 26 is moved over the second locking surface 22. In this locking position the second locking arm 20 blocks movement of the shifter yoke in a second direction (in clockwise direction in Fig. 7) to the R position by blocking engagement between the enlarged head portion 26 and the second locking surface 22. There is no possibility for movement of the shifter yoke in the opposite direction since the P position is the ultimate position in the shift gate.

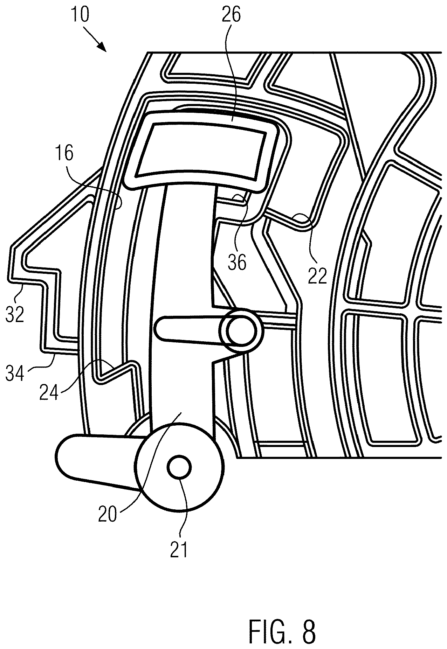

In Fig. 8 the second locking arm 20 has been pivoted about its second pivotal bearing 21 to the unlocking position in which the second locking arm 20 has been pivoted away from the second locking surface 22. In this unlocking position of the second locking arm 20 the shifter yoke 10 can be pivoted in the second direction (clockwise direction in Fig. 8) since the enlarged head portion 26 of the second locking arm 20 has been moved out of the way of the second locking surface 22.

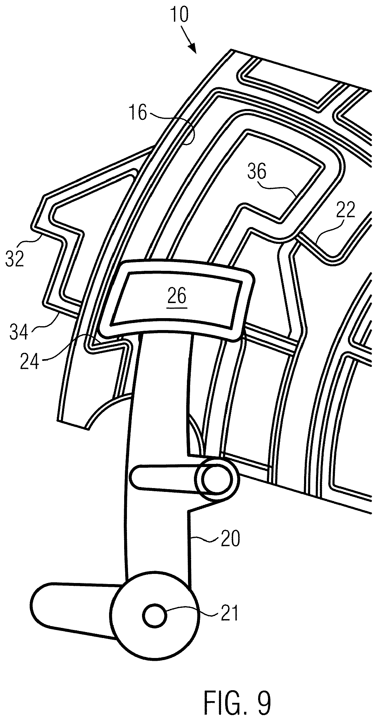

Fig. 9 shows the state in which the shifter yoke 10 has been pivoted to the next shift position, namely the N position. The second locking arm 20 was maintained in the unlocking position 20, i.e. the second solenoid actuator which moved the second locking arm 20 to the unlocking position was kept in the activated state. As can be seen in Fig. 9 there is a third locking surface 24 formed in the recess which comes into abutment against the enlarged head portion 26 of the second locking arm 20 when the N position is reached and the second locking arm 20 is kept in the unlocking position. In this situation the second locking arm 20 blocks further pivotal movement of the shifter yoke 10 in the second direction (in clockwise direction) out of the N position.

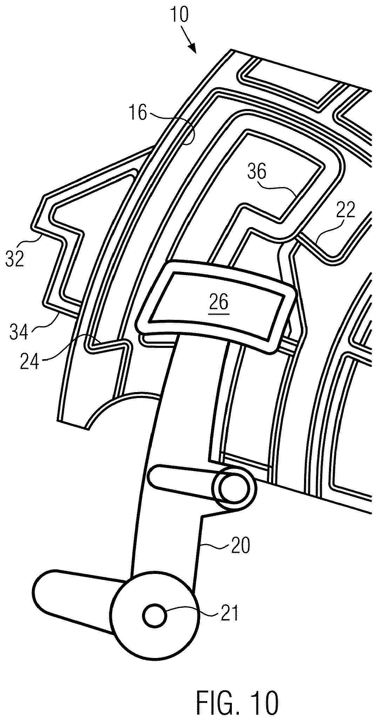

In Fig. 10 the second solenoid actuator has been turned off and the second locking arm 20 has returned to the locking position. Due to this movement of the second locking arm 20 the enlarged head portion 26 is moved away from the third locking surface 24 such that the shifter yokes 10 may be pivoted further.

In the following the operation of the first locking arm 30 in cooperation with the first locking surfaces 32 and 34 will described in connection with Fig. 11 to 16 which show a sequence of movement states of the first locking arm 30 and the shifter yoke 10.

Fig. 11 shows the first locking arm 30 in the locking position pivoted against the outer periphery of the shifter yoke 10. Shifter yoke 10 is pivoted to the N position. In Fig. 11 the first locking arm 30 opposes with its end remote from its pivotal bearing 31 the second first locking surface 34 and thus blocks pivotal movement of the shifter yoke 10 in the first direction (anti-clockwise direction in Fig. 11).

In Fig. 12 the first solenoid actuator has been activated and pivoted the first locking arm 30 away from the outer periphery of the shifter yoke 10 to the unlocking position. After bringing the first locking arm 30 to the unlocking position the shifter yoke 10 can now be pivoted further in the first direction (anti-clockwise direction in Fig.) 12 to the R position.

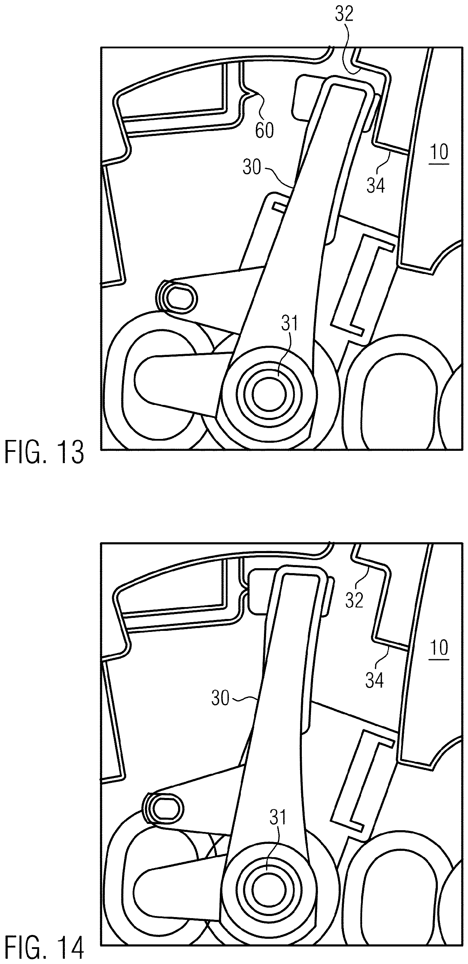

Fig. 13 shows the shifter yoke pivoted to the R position, wherein the first locking arm 30 has been returned to its locking position by deactivating the first solenoid actuator. In this state the first locking arm 30 blocks with its end remote from its pivotal bearing 31 further pivotal movement of the shifter yoke 10 in the first direction (anti-clockwise direction) by obstructing further movement of the first first locking surface 32. In this state the shifter yoke is blocked from being moved from the R position to the P position.

In Fig. 14 the first locking arm 30 has been brought to its unlocking position by activation of the first solenoid actuator. In this state the first locking arm 30 abuts against a counter-surface in the base, in particular against an elastic tip portion 60 which is arranged to dampen the impact of the second locking arm on the counter-surface to avoid generation of noise.

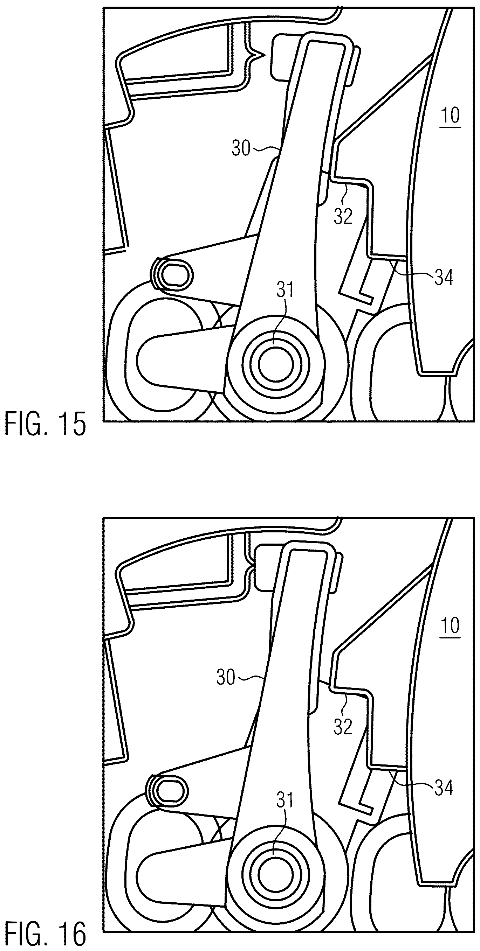

In the state of Fig. 14 the first locking arm 30 no longer obstructs further pivotal movement of the shifter yoke 10 in the first direction so that the shifter yoke 10 can be moved to the P position by further pivoting in the first direction (anti-clockwise direction). During this movement the first locking surfaces 34 and 32 formed on the projection on the outer periphery moved past the end of the first locking arm 30 remote from its pivotal bearing 31 as can be seen in Fig. 15. In Fig. 16 the first arm 30 reached a further counter-surface.

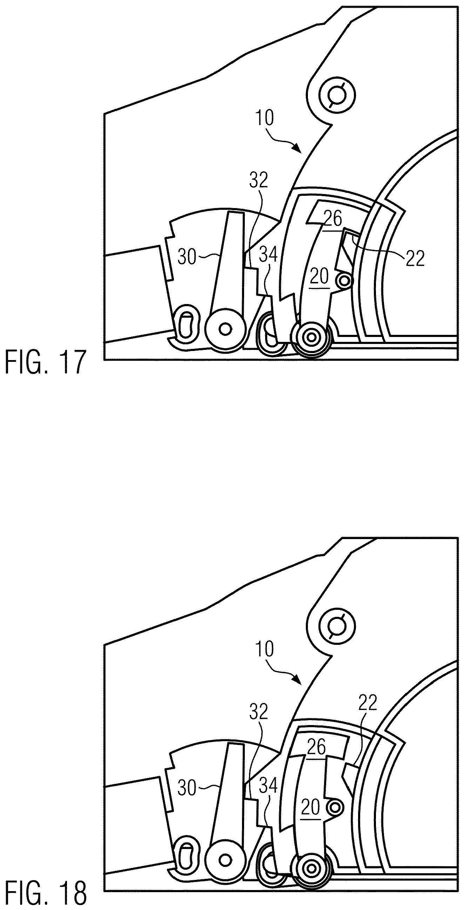

In the following the coordinated operation of the first and second locking arms 20, 30 will be illustrated with reference to Figs. 17 to 25 which show subsequent movement states of the first and second locking arms 30, 20 and of the shifter yoke in a sequence.

In the state shown in Fig. 17 the second locking arm 20 is in the locking position in the transverse extension of the recess such that the enlarged head portion 26 is moved over the second locking surface 22. In this situation the shifter yoke 10 is locked in the P position (P-locked) . None of the first and second solenoid actuators is active in the state of Fig. 17. A control unit which is connected to sensors and to the solenoid actuators now determines whether certain conditions are fulfilled, for example if the brake pedal is pressed and if a knob button on the shift lever is pressed by the operator which are the requirements that the shifter yoke 10 is unlocked in the P position. If the requirements are fulfilled the second solenoid actuator is activated and the second locking arm 20 is pivoted away from the second lock surface 22, as shown in Fig. 18. Shifter yoke 10 is now free to be moved in the second (clockwise) direction past the projection which provides the second locking surface 22 (a movement in the opposite direction is not possible since in this direction there is no shift position beyond P).

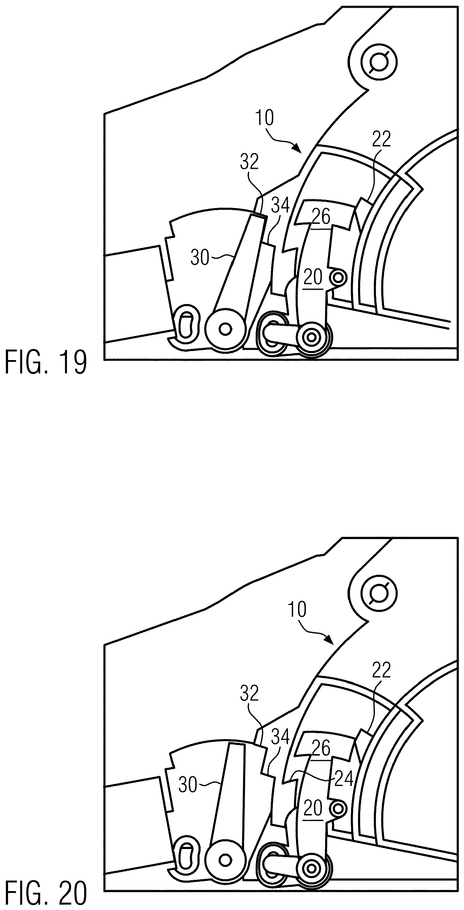

The first locking arm 30 does not influence the shifter yoke movement in clockwise direction out of the position shown in Fig. 18. When the first first locking surface 32 on the outer periphery of the shifter yoke 10 reaches the free end of the first locking arm 30, the first locking arm 30 is biased against the outer periphery of the shifter yoke 10 and moves into the position shown in Fig. 19. In this way it comes into abutment with the first locking surface 32. This position of the shifter yoke 10 corresponds to the R position, and the shifter yoke is now locked by the first locking arm 30 against pivotal movements in the first direction (in anti-clockwise direction in the views of the Figures) to the P position (R-locked), whereas there is no restriction for moving to the N position.

If the operator now wants to change from the R position with a locked shifter yoke as shown in Fig. 19 to the P position, the control unit checks whether certain conditions are fulfilled (knob button pressed), and if so, the control unit actuates the first solenoid actuator which pivots the first locking arm 30 away from the outer periphery of the shifter yoke 10 into an unlocking position, as shown in Fig. 20. Now the operator can pivot the shift lever and thereby the shifter yoke 10 in the first direction (anti-clockwise direction in the views of the Figures) to the P position.

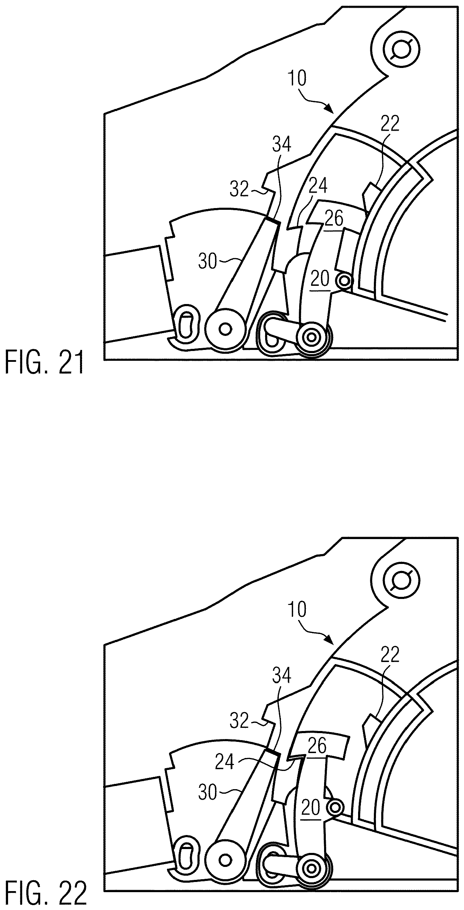

If the operator instead pivots the shift lever and thereby the shifter yoke to the N position the first locking arm 30 is moved by a bias mechanism towards the locking position in which the free end surface of the first locking arm 30 comes into abutment on the second first locking surface 34, as shown in Fig. 21, when the N position is reached. This establishes a state in which the shifter yoke is blocked from being moved in the first (anti-clockwise) direction to the R position (N-locked). Movement to the D position is not restricted, whereas movement to the R position would only be permitted if the knob button on the shift lever is pressed, and the control unit would bring the first shift lever back to the unlocking position.

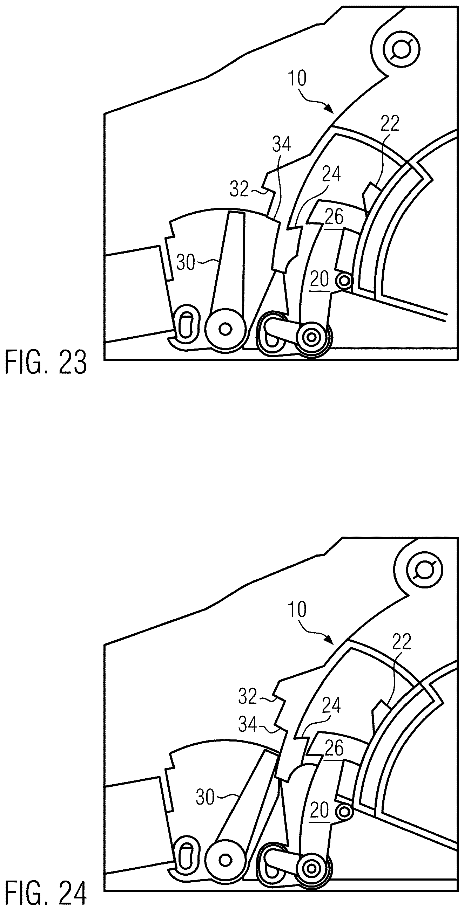

On the other hand, under certain circumstance in the N locked state of Fig. 21 the control unit can activate the second solenoid actuator to bring the second locking arm 20 to a state pivoted towards the outer periphery of the shifter yoke 10 such that a portion of the enlarged head portion 26 comes into abutment against a third locking surface 24 provided in the recess of the shifter yoke. This state is shown in Fig. 22 in which the shifter yoke 10 is locked by the first locking arm 30 against pivotal movements in anti-clockwise direction, and by the second locking arm 20 against pivotal movements in clockwise direction (N-interlock). Only if predefined criteria are fulfilled the control unit allows movement to the R (knob button pressed) or to the D position (brake pedal pressed). In the latter case the second solenoid actuator is activated which brings the second locking arm 20 to the locking position pivoted towards the inner side wall of the recess, as shown in Fig. 23. Now the shift lever and shifter yoke can be pivoted further in clockwise direction to the D position, as shown in Fig. 24. In this state the first locking arm 30 remains in a locking position pivoted towards the outer periphery of the shifter yoke 10 (D locked).

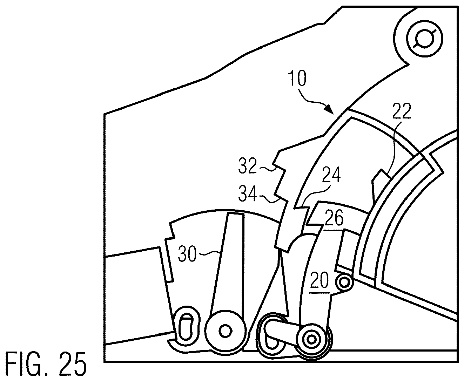

In Fig. 25 the first solenoid actuator has been activated and the first locking arm 30 been pivoted away to its unlocking position (D-unlocked).

From the above description it follows that the first locking arm 30 is arranged to cooperate with first locking surfaces 32 and 34 in such a manner that the first locking arm 30 is able to block movement of the shifter yoke in a first direction only (an anti-clockwise direction in the Figs.), whereas the first locking arm is not able to block movements in the opposite direction. In other words there is no positive mechanical engagement but only a blocking contact between the first locking arm 30 and one of the first locking surfaces 32 and 34 obstructing further pivotal movement in the first direction (anti-clockwise direction). On the other hand, the second locking arm is cooperating with the second locking surface 22 to block pivotal movement of the shifter yoke out of the P position (Fig. 7) in the second direction (clockwise direction), and is cooperating with a third locking surface 24 in the N position (Fig. 9) to block further pivotal movement in the second direction, whereas there is no locking engagement is possible preventing movement in the opposite direction. Therefore, it can be seen that the first and second locking arms 30 and 20 and the cooperating locking surfaces are arranged such that each of the first and second locking arms blocks movement in one direction only, whereas there is no locking function in the respective opposite direction. For this reason there is no need for a positive mechanical inter-engagement between locking components, and therefore less strict requirements on the dimension tolerances of the locking arms and the cooperating surface structures and their relative positioning apply.

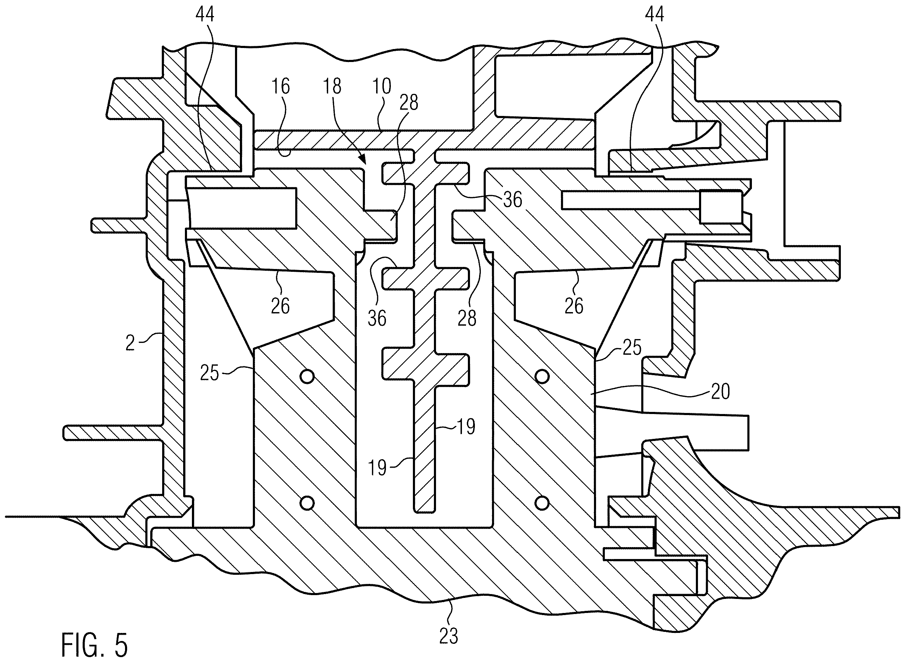

An additional advantage of this design feature that each of the first and second locking arms has to be able to absorb loads only in one predetermined direction, and therefore simple means for supporting such loads, in particular overload protections, can be provided. An example for such an overload protection can be seen in the cross-sectional view of Fig. 5. Fig. 5 shows a cross-sectional view through base 2, second locking arm 20, and shifter yoke 10 in a plane parallel to the first pivotal axis. In the embodiment shown the second arm 20 is provided as a symmetrical double arm arrangement having two symmetrical arm portions 25 extending into symmetrical recesses 18 on both sides of the shifter yoke 10. The shifter arm portions 25 are connected by a common pivot shaft portion 23 which is mounted in a second bearing in the base 2. This second bearing does not have to be designed to be capable of resisting large loads, but can be designed to yield under strong loads. If for example the operator tries to pull the shift lever out of the P position although the second locking arm 20 is in its locking position (see Fig. 7) by trying to turn the shifter yoke 10 with force in clockwise direction such load will exert a force on the second locking arm 20 that is, in the view of Fig. 7, in vertical upward direction. The orientation of Fig. 5 is the same so that an overload on the second locking arm 20 in the locking position would result in a force in upward direction. If the second bearing of the second locking arm 20 in the base is yielding once a threshold load is exceeded, the entire second arm is slightly displaced vertically upwards. The enlarged head portions 26 of both second arm portions 25 have projections facing away from the shifter yoke 10 and laterally extending beyond the shifter yoke 10. The base 2 is provided with overload protection supports 44 which extend as shoulders over the lateral projections of the enlarged head portions 26, leaving a gap between the overload protection supports 44 and the lateral projections if no load is exerted on the second locking arm 20. If an overload is applied to the shifter yoke when the second locking arm is in the locking position the second pivotal bearing is yielding when a threshold load is exceeded. This is accompanied by a displacement of the second locking arm vertically upwards such that the upper surfaces of the lateral projections of the enlarged head portions 26 of the second locking arm come into abutment on the lower surfaces of the overload protection supports 44 so that the second locking arm 20 may rest on the overload protection supports 44 of the base 2. There is no need to provide any overload protection for forces that would result in a displacement of the second locking arm 20 in downward direction in the view of Fig. 5 since according to the present invention the second locking arm 20 is designed to be able to block movements of the shifter yoke in clockwise direction only, but has no blocking capability against anti-clockwise movements of the shifter yoke so that downward displacements in the view of Fig. 5 by design cannot occur for the second locking arm 20.

Another advantageous feature can also be described first in connection with Fig. 5. Both enlarged head portions 26 of the second arm portions 25 have an inwardly projecting elastic pin 28. Each elastic pin extends towards the bottom 19 of the recess 18 it is facing. Each elastic pin 28 is arranged such that its end portion is disposed between opposing walls of the guide track 36 formed on the bottom 19 of each of the recesses 18. As can be seen from Figs. 3 and 4 the projecting walls of the guide track 36 essentially follow the course of the side wall 16 of the recess, but are shifted towards the inside of the recess. The course of the guide track 36 is designed such that the elastic pin 28 of the second locking arm will first come into contact with the projecting wall of the guide track 36 before any part of the enlarged head portion 26 of the second locking arm comes close to a side wall 16 in the recess 18. In this manner any impact of the enlarged head portion 26 on the side wall 16 is dampened which leads to noise reduction when the positioning of the second locking arm 20 is quickly changed.

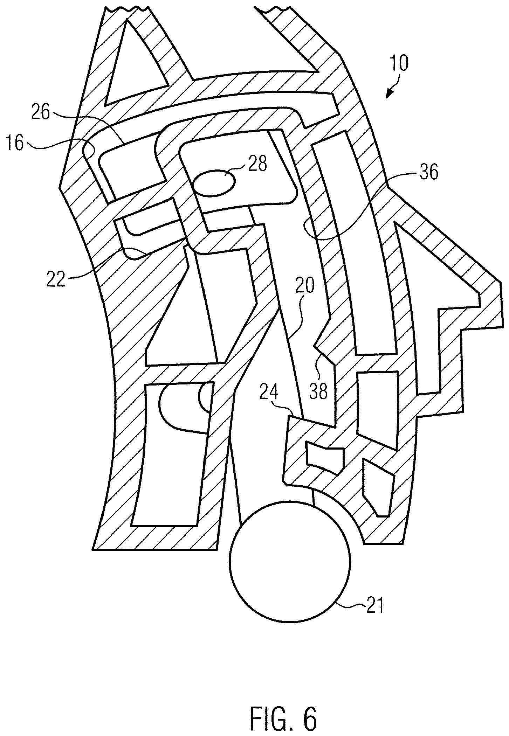

This function of the elastic pin 28 of the second locking arm 20 can also be seen in Fig. 6 which shows a cross-sectional view through the shifter yoke 10 in a plane parallel to the bottom 19 of the recess 18, but shifted upwards such that the cut is going through the projecting wall of the guide track 36. Behind the cross-sectional part of the shifter yoke 10 the inner surface of the second locking arm 20 can be seen in a plan view. In this view the elastic pin 28 of the second locking arm is extending in the direction perpendicular to the Figure plane into the area which is surrounded by the projecting wall forming the guide track 36. Fig. 6 shows that the elastic pin 28 already comes into contact with the projecting wall of the guide track before the front surface of the enlarged head portion 26 comes into contact with the side wall 16 of the recess. In this manner impacts on the side wall 16 and resulting noise can be avoided.

As can be seen in Figs. 3, 4, 6 and 7 the guide track 36 is provided with an inwardly projecting guiding surface portion in the form of a bump 38. The purpose of this guiding surface portion 38 is to push the second locking arm 20 back if the second solenoid activator is not quick enough. In this case the elastic pin 28 of the second locking arm 20 slides along the guiding surface portion 28 in the form of the bump, whereby the second locking arm is deflected. This situation occurs if the shift lever is unlocked in P and the driver pulls hard and rapidly on the shift lever with the intention of reaching for instance D. Under such circumstances the locking arm may remain in a position in which it would collide with the third locking surface. Normally, the second locking arm is moved back by its bias mechanism once the activation of the second solenoid actuator is terminated, but if the drivers moves the shift lever very quickly the bias mechanism may not be quick enough to push the second locking arm out of the way, in which case the elastic pin 28 is sliding along the inwardly inclined surface of the bump 38 which pivots the second locking arm away (in clockwise direction in the Figs.).

## Claims

1. Gear shifter assembly for a vehicle comprising:
- a base (2) to be fixed in a vehicle,
- a shifter yoke (10) having the shape of a disk segment and being mounted in the base to be pivotable about a pivotal axis and comprising a cable connector (18) at a distance to its pivotal axis for connection of a cable to transfer pivotal shifter yoke movements to a transmission,
- a shift lever (50) connected to the shifter yoke to pivot the shifter yoke along a shift gate,
- a locking arm arrangement (20, 30) pivotably mounted to the base and adapted to cooperate with lock surface structures (22, 32, 34) on the shifter yoke such that the locking arm arrangement abuts against the lock surface structures to block pivotal movement of the shifter yoke at a predetermined pivotal position when the locking arm arrangement is in a locking position, and that, when the locking arm arrangement is in an unlocking position pivoted away from the lock surface structures, the locking arm arrangement is free to pass the lock surface structures to thereby allow pivotal movement of the shifter yoke,
- a bias device acting on the locking arm arrangement urging it to one of the locking and unlocking positions,
- a solenoid actuator (39, 29) adapted to move the locking arm arrangement to the other one of the locking and unlocking positions when the solenoid actuator is activated,
**characterized in that**
- the solenoid actuator (39, 29) comprises a first solenoid actuator (39) and a second solenoid actuator (29),
- the locking arm arrangement (20, 30) comprises a first locking arm (30) moveable by said first solenoid actuator (39), wherein when said first solenoid actuator (39) is activated, the first locking arm (30) is in its unlocking position, and
a second locking arm (20) moveable by said second solenoid actuator (29), wherein when said second solenoid actuator (29) is activated, the second locking arm (20) is in its unlocking position, and
- the lock surface structures comprise a first lock surface (32, 34) and a second lock surface (22), and
- the first locking arm (30) and the first lock surface (32, 34) are arranged to, when the first locking arm is in the locking position and when the shifter yoke is in a first predetermined pivotal position, block pivotal movement of the shifter yoke in a first direction only, and that the second locking arm ((20) and the second lock surface (22) are arranged to, when the second locking arm is in the locking position and when the shifter yoke is in a second predetermined pivotal position, block pivoting of the shifter yoke in a second direction only which is opposite to the first direction.

2. Gear shifter assembly according to claim 1, **characterized in that** the first lock surface (32, 34) is formed by a projection on the outer periphery of the shifter yoke (10) as a radially extending front surface of the projection extending in radial direction of the shifter yoke with respect to its pivotal axis, and **in that** the first locking arm (30) is pivotably mounted in the base in a first bearing (31) at a radial distance greater than the radial distance of the projection from the pivotal axis of the shifter yoke such that the end of the first locking arm opposite to its pivotal mounting is abutting against the first lock surface (32, 34) when the first locking arm (30) is in the locking position, and such that this end of the first locking arm is in the unlocking position pivoted radially further away from the pivotal axis of the shifter yoke such that the first lock surface (32, 34) may pass the first locking arm in the unlocking position.

3. Gear shifter assembly according to claim 1 or 2, **characterized in that** the first locking arm (30) extends in the locking position perpendicular to the first lock surface (32, 34) and parallel to a tangent on the periphery of the disk segment of the shifter yoke (10).

4. Gear shifter assembly according any of the preceding claims, **characterized in that** the second locking arm (20) is pivotably mounted in the base in a second bearing (21) at a radial distance to the pivotal axis of the shifter yoke that is smaller than the radial distance of the periphery of the shifter yoke (10), and extends into a recess (18) in a side surface of the shifter yoke (10), the side walls (16) surrounding the recess being provided with a projection forming the second lock surface (22) extending in radial direction with respect to the pivotal axis of the shifter yoke, wherein the second locking (20) arm comprises an extended head (26) at the end opposite to the second bearing (21), which extended head is arranged to be moved over the second lock surface (22) at a predetermined pivotal shifter yoke position to block rotation of the shifter yoke (10) in the second direction.

5. Gear shifter assembly according to claim 4, **characterized in that** side walls (16) of the recess (18) are provided with a third lock surface (24) which is arranged to cooperate with the head (26) of the second locking arm (20) when the second locking arm is in its unlocking position to block further rotation of the shifter yoke in the second direction at a third predetermined pivotal position of the shifter yoke.

6. Gear shifter assembly according to claim 4 or 5, characterized the second locking surface (22) is a radially extending surface of a transverse extension of the recess, and in that the second locking arm (20) extends in the locking position perpendicular to the second lock surface and parallel to a tangent on the periphery of the disk segment of the shifter yoke.

7. Gear shifter assembly according to claims 2 and 4 or claims 3 and 4, **characterized in that** the first bearing (31) of the first locking arm (30) and the second bearing (21) of the second locking arm (20) are disposed, when viewed from the pivotal axis of the shifter yoke (10), at polar angles with respect to the pivotal axis which differ by less than 15°.

8. Gear shifter assembly according to any of the preceding claims 4 to 7, **characterized in that** a bottom wall (19) of the recess (18) is provided with a projecting guiding track (36) and **in that** the second locking arm (20) comprises an elastic pin (28) extending towards the bottom wall (19) of the recess (18) into the area surrounded by the projecting guiding track (36), the projecting guiding track being arranged such that the elastic pin contacts the projecting guiding track before the second locking arm (20) reaches any portion of the side wall (16) surrounding the recess (18) in order to slow down movement of the second locking arm with respect to the side wall to damp the impact of the second locking arm on the side wall.

9. Gear shifter assembly according to any of the claims 4 to 8, **characterized in that** there are symmetrical recesses (18) on both opposite side surfaces of the disk segment of the shifter yoke (10) and **in that** the second locking arm (20) comprises two symmetrical locking arm portions (25) connected by a shaft portion (23) disposed outside of the recesses, which shaft portion is pivotably mounted in the second bearing in the base, each locking arm portion extending into one of the recesses.

10. Gear shifter assembly according to claim 2 or any of the preceding claims 3 to 9 in combination with claim 2, **characterized in that** the first bearing (31) is arranged to elastically yield within the base when a threshold torque exerted on the shifter yoke in the first direction is exceeded, wherein a first overload protection support is disposed in the base such that the first locking arm abuts on and is supported by the first overload protection support when the first bearing yielded as a result of a torque in the first direction above the threshold torque.

11. Gear shifter assembly according to claim 4 or any of the preceding claims 5 to 10 in combination with claim 4, **characterized in that** the second bearing (21) is arranged to elastically yield within the base when a threshold torque exerted on the shifter yoke (10) in the second direction is exceeded, wherein a second overload protection support (44) is disposed in the base such that second locking arm abuts on and is supported by the second overload protection support (44) when the second bearing (21) yielded as a result of a torque in the second direction above the threshold torque.

12. Gear shifter assembly according to claim 8 or any of the claims 9 to 11 in combination with claim 8, **characterized in that** the projecting guiding track (36) is provided with a guiding surface portion (38) which pivots the second locking arm when the elastic pin (28) of the second locking arm (20) is sliding along the guiding surface portion (27) of the guiding track when the shifter yoke pivots between gear shift positions.

13. Gear shifter assembly according to any of the preceding claims, **characterized in that** the shift gate is a shift gate of an automatic transmission having a sequence of shift positions P, R, N, D, and that the first lock surface comprises two first lock surfaces (32, 34), one for blocking in the position R against rotation in the first direction to the P position, and one for blocking the shifter yoke in the N position against rotation in the first direction to the R position when the first locking arm (30) is in the locking position.

14. Gear shifter assembly according to claims 5 and 13, **characterized in that** the second lock surface (22) is arranged to block the shifter yoke in the position P against rotation in the second direction to the R position by the second locking arm (20) when it is in the locking position, and that the third lock surface (24) is arranged for blocking the shifter yoke in the N position against rotation in the second direction to the D position by the second locking arm (20) when it is in the unlocking position.

15. Gear shifter assembly according to claim 13, **characterized in that** the shift lever is mounted to be pivotable with respect to the shifter yoke about a second pivotal axis perpendicular to the first pivotal axis to move the shift lever from the automatic shift gate to a manual shift gate and vice versa, wherein the connection of the shift lever to the shifter yoke is such that the shift lever is in engagement with the shifter yoke to be able to pivot the shifter yoke by pivoting the shift lever when the shift lever is in the automatic shift gate, and is out of engagement with the shifter yoke when in the manual shift gate.

## Patentansprüche

1. Gangschaltungsanordnung für ein Fahrzeug mit:
- einer Basis (2), die in einem Fahrzeug zu montieren ist,
- einem Schaltjoch (10), das die Form eines Scheibensegments hat und in der Basis gelagert ist, um um eine Schwenkachse schwenkbar zu sein, und das auf Abstand zu seiner Schwenkachse einen Seilzugverbinder (18) zum Montieren eines Seilzugs aufweist, um schwenkende Bewegungen des Schaltjochs zu einem Getriebe zu übertragen,
- einem Schalthebel (50), der mit dem Schaltjoch verbunden ist, um das Schaltjoch entlang einer Schaltgasse zu schwenken,
- einer Verriegelungsarmanordnung (20, 30), die schwenkbar an der Basis gelagert ist und dazu gestaltet ist, um mit Verriegelungsoberflächenstrukturen (22, 32, 34) an dem Schaltjoch zusammenzuwirken, so dass die Verriegelungsarmanordnung an den Verriegelungsoberflächenstrukturen anliegt, um Schwenkbewegungen des Schaltjoch an einer vorbestimmten Schwenkstellung zu blockieren, wenn die Verriegelungsarmanordnung in einer Verriegelungsstellung ist, und so dass, wenn die Verriegelungsarmanordnung in einer entriegelten Stellung von den Verriegelungsoberflächenstrukturen weg geschwenkt ist, die Verriegelungsarmanordnung frei ist, die Verriegelungsoberflächenstrukturen zu passieren, um dadurch Schwenkbewegung des Schaltjochs zu ermöglichen,
- einer Vorspanneinrichtung, die auf die Verriegelungsarmanordnung einwirkt, um sie in eine von der verriegelten Stellung und der entriegelten Stellung zu drücken,
- einem Solenoid-Aktuator (39, 29), der dazu ausgestaltet ist, die Verriegelungsarmanordnung wenn der Solenoid-Aktuator aktiviert wird, in die andere von der verriegelten und der unverriegelten Stellung zu bewegen,
**dadurch gekennzeichnet, dass**
- der Solenoid-Aktuator (39, 29) einen ersten Solenoid-Aktuator (39) und einen zweiten Solenoid-Aktuator (29) umfasst,
- die Verriegelungsarmanordnung (20, 30) einen ersten Verriegelungsarm (30), der durch den ersten Solenoid-Aktuator (39) bewegbar ist, wobei, wenn der erste Solenoid-Aktuator (39) aktiviert ist, sich der erste Verriegelungsarm (30) in seiner entriegelten Stellung befindet, und einen zweiten Verriegelungsarm (20) aufweist, der durch den zweiten Solenoid-Aktuator (29) bewegbar ist, wobei, wenn der zweite Solenoid-Aktuator (29) aktiviert ist, sich der zweite Verriegelungsarm (20) in seiner entriegelten Stellung befindet, und
- die Verriegelungsoberflächenstrukturen eine erste Verriegelungsoberfläche (32, 34) und eine zweite Verriegelungsoberfläche (22) umfassen, und
- der erste Verriegelungsarm (30) und die erste Verriegelungsoberfläche (32, 34) dazu ausgestaltet sind, wenn der erste Verriegelungsarm in der verriegelten Stellung ist und das Schaltjoch in einer ersten vorgegebenen Schwenkstellung ist, Schwenkbewegungen des Schaltjochs nur in einer ersten Richtung zu blockieren, und der zweite Verriegelungsarm (20) und die zweite Verriegelungsoberfläche (22) dazu ausgestaltet sind, wenn der zweite Verriegelungsarm sich in der verriegelten Stellung befindet und wenn das Schaltjoch in einer zweiten vorgegebenen Schwenkstellung ist, Schwenken des Schaltjochs nur in einer zweiten Richtung, die der ersten Richtung entgegengesetzt ist, zu blockieren.

2. Gangschaltungsanordnung nach Anspruch 1, **dadurch gekennzeichnet, dass** die erste Verriegelungsoberfläche (32, 34) durch einen Vorsprung an der äußeren Peripherie des Schaltjochs (10) als eine radial ausgedehnte Stirnfläche des in radialer Richtung des Schaltjochs in Bezug auf seine Schwenkachse vorstehenden Vorsprungs gebildet ist, und dass der erste Verriegelungsarm (30) in der Basis schwenkbar gelagert ist in einem ersten Lager (31) in einem radialen Abstand von der Schwenkachse des Schaltjochs, der größer ist als der radiale Abstand des Vorsprungs, so dass das Ende des ersten Verriegelungsarms, das seiner schwenkbaren Lagerung gegenüberliegt, an der ersten Verriegelungsoberfläche (32, 34) anliegt, wenn der erste Verriegelungsarm (30) in der verriegelten Stellung ist, und so dass dieses Ende des ersten Verriegelungsarms in der entriegelten Stellung radial weiter weg von der Schwenkachse des Schaltjochs geschwenkt ist, so dass die erste Verriegelungsoberfläche (32, 34) den ersten Verriegelungsarm in der entriegelten Stellung passieren kann.

3. Gangschaltungsanordnung nach Anspruch 1 oder 2, **dadurch gekennzeichnet, dass** der erste Verriegelungsarm (30) in der verriegelten Stellung senkrecht zu der ersten Verriegelungsoberfläche (32,34) und parallel zu einer Tangente an der Peripherie des Scheibensegments des Schaltjochs (10) verläuft.

4. Gangschaltungsanordnung nach einem der vorhergehenden Ansprüche, **dadurch gekennzeichnet, dass** der zweite Verriegelungsarm (20) in der Basis schwenkbar gelagert ist in einem zweiten Lager (21) in einem radialen Abstand zu der Schwenkachse des Schaltjochs, der größer ist als der radiale Abstand der Peripherie des Schaltjochs (10), und dass der zweite Verriegelungsarm in eine Ausnehmung (18) in einer seitlichen Oberfläche des Schaltjochs (10)verläuft, wobei die Seitenwände (16), die die Ausnehmung umgeben, mit einem Vorsprung ausgebildet sind, der die zweite Verriegelungsoberfläche (22) bildet, die sich in radialer Richtung in Bezug auf die Schwenkachse des Schaltjochs erstreckt, wobei der zweite Verriegelungsarm (20) einen vergrößerten Kopf (26) an dem dem zweiten Lager (21) gegenüberliegenden Ende aufweist, wobei der vergrößerte Kopf dazu ausgestaltet ist, bei einer vorgegeben Schwenkstellung des Schaltjochs über die zweite Verriegelungsoberfläche (22) bewegt zu werden, um die Drehung des Schaltjochs in die zweite Richtung zu blockieren.

5. Gangschaltungsanordnung nach Anspruch 4, **dadurch gekennzeichnet, dass** die Seitenwände (16) der Ausnehmung (18) mit einer dritten Verriegelungsoberfläche (24) versehen sind, die dazu ausgestaltet ist, um mit dem Kopf (26) des zweiten Verriegelungsarms (20) zusammenzuwirken, wenn der zweite Verriegelungsarm in seiner entriegelten Stellung ist, um weitere Drehung des Schaltjochs in die zweite Richtung in einer dritten vorgegebenen Schwenkstellung des Schaltjochs zu blockieren.

6. Gangschaltungsanordnung nach Anspruch 4 oder 5, **dadurch gekennzeichnet, dass** die zweite Verriegelungsoberfläche (22) eine sich radial erstreckende Oberfläche einer querverlaufenden Erweiterung der Ausnehmung ist und dass der zweite Verriegelungsarm (20) in der verriegelten Stellung senkrecht zu der zweiten Verriegelungsoberfläche und parallel zu einer Tangente an der Peripherie des Scheibensegments des Schaltjochs verläuft.

7. Gangschaltungsanordnung nach Ansprüchen 2 und 4 oder Ansprüchen 3 und 4, **dadurch gekennzeichnet, dass** das erste Lager (31) des ersten Verriegelungsarms (30) und das zweite Lager (21) des zweiten Verriegelungsarms (20) bei Betrachtung von der Schwenkachse des Schaltjochs (10) aus bei Polarwinkeln in Bezug auf die Schwenkachse angeordnet sind, die sich um weniger als 15° unterscheiden.

8. Gangschaltungsanordnung nach einem der vorhergehenden Ansprüche 4 bis 7, **dadurch gekennzeichnet, dass** eine Bodenwand (19) der Ausnehmung (18) mit einer vorstehenden Führungsbahn (36) versehen ist und dass der zweite Verriegelungsarm (20) einen elastischen Stift (28) aufweist, der auf die Bodenwand (19) der Ausnehmung (18) gerichtet in das Gebiet vorsteht, das von der vorstehenden Führungsbahn (36) umgeben ist, wobei die vorstehende Führungsbahn dazu ausgestaltet ist, dass der elastische Stift in Kontakt mit der vorstehenden Führungsbahn kommt, bevor der zweite Verriegelungsarm (20) irgendeinen Bereich der die Ausnehmung (18) umgebenden Seitenwand (16) erreicht, um die Bewegung des zweiten Verriegelungsarms in Bezug auf die Seitenwand zu bremsen, um den Aufschlag des zweiten Verriegelungsarms auf die Seitenwand zu dämpfen.

9. Gangschaltungsanordnung nach einem der Ansprüche 4 bis 8, **dadurch gekennzeichnet, dass** symmetrische Ausnehmungen (18) auf beiden gegenüberliegenden seitlichen Oberflächen des Scheibensegments des Schaltjochs (10) vorhanden sind und dass der Verriegelungsarm (20) zwei symmetrische Verriegelungsarmabschnitte (25) aufweist, die durch einen Wellenabschnitt (23) miteinander verbunden sind, der außerhalb der Ausnehmungen liegt, wobei der Wellenabschnitt in dem zweiten Lager in der Basis schwenkbar gelagert ist, wobei jeder Verriegelungsarmabschnitt in eine der Ausnehmungen verläuft.

10. Gangschaltungsanordnung nach Anspruch 2 oder einem der vorhergehenden Ansprüche 3 bis 9 in Kombination mit Anspruch 2, **dadurch gekennzeichnet, dass** das erste Lager (31) dazu ausgestaltet ist, um innerhalb der Basis elastisch nachzugeben, wenn ein Schwellendrehmoment auf das Schaltjoch in der ersten Richtung überschritten wird, wobei eine erste Überlastungsschutzstütze in der Basis so angeordnet ist, dass der erste Verriegelungsarm in Anlage kommt an und unterstützt wird durch die erste Überlastungsschutzstütze, wenn das erste Lager infolge eines Drehmoments in der ersten Richtung oberhalb des Schwellendrehmoments nachgegeben hat.

11. Gangschaltungsanordnung nach Anspruch 4 oder einem der Ansprüche 5 bis 10 in Kombination mit Anspruch 4, **dadurch gekennzeichnet, dass** das zweite Lager (21) dazu ausgestaltet ist, um innerhalb der Basis elastisch nachzugeben, wenn ein auf das Schaltjoch (10) in der zweiten Richtung ausgeübtes Schwellendrehmoment überschritten wird, wobei eine zweite Überlastungsschutzstütze (44) in der Basis so angeordnet ist, dass der zweite Verriegelungsarm in Anlage kommt an und unterstützt wird durch die zweite Überlastschutzstütze (44), wenn das zweite Lager (21) infolge eines Drehmoments in der zweiten Richtung oberhalb des Schwellendrehmoments nachgegeben hat.

12. Gangschaltungsanordnung nach Anspruch 8 oder einem der Ansprüche 9 bis 11 in Kombination mit Anspruch 8, **dadurch gekennzeichnet, dass** die vorstehende Führungsbahn (36) mit einem Führungsoberflächenbereich (38) versehen ist, der den zweiten Verriegelungsarm schwenkt, wenn der elastische Stift (28) des zweiten Verriegelungsarms (20) entlang des Führungsoberflächenbereichs (27) der Führungsbahn gleitet, wenn das Schaltjoch zwischen den Gangschaltstellungen schwenkt.

13. Gangschaltungsanordnung nach einem der vorhergehenden Ansprüche, **dadurch gekennzeichnet, dass** die Schaltgasse eine Schaltgasse eines Automatikgetriebes mit einer Abfolge von Schaltstellungen P, R, N, D ist und dass die erste Verrieglungsoberfläche zwei erste Verriegelungsoberflächen (32, 34) umfasst, eine, um in der Stellung R gegen Drehung in die erste Richtung in die P-Stellung zu blockieren, und eine, um das Schaltjoch in der N-Stellung gegen Drehung in die erste Richtung in die R-Stellung zu blockieren, wenn der ersten Verriegelungsarm (30) in der verriegelten Stellung ist.

14. Gangschaltungsanordnung nach Ansprüchen 5 und 13, **dadurch gekennzeichnet, dass** die zweite Verriegelungsoberfläche (22) dazu ausgestaltet ist, um das Schaltjoch in der Stellung P gegen Drehung in die zweite Richtung in die R-Stellung durch den zweiten Verriegelungsarm (20) zu blockieren, wenn dieser in der verriegelten Stellung ist, und dass die dritte Verriegelungsoberfläche (24) dazu ausgestaltet ist, um das Schaltjoch in der N-Stellung gegen Drehung in die zweite Richtung in die D-Stellung durch den zweiten Verriegelungsarm (20) zu blockieren, wenn dieser in der entriegelten Stellung ist.

15. Gangschaltungsanordnung nach Anspruch 13, **dadurch gekennzeichnet, dass** der Schalthebel so gelagert ist, um schwenkbar bezüglich des Schaltjochs um eine zweite Schwenkachse senkrecht zu der ersten Schwenkachse zu sein, um den Schalthebel aus der Automatik-Schaltgasse in eine manuelle Schaltgasse und umgekehrt zu bewegen, wobei die Verbindung von dem Schalthebel mit dem Schaltjoch so ist, dass der Schalthebel in Eingriff mit dem Schaltjoch ist, um in der Lage zu sein, das Schaltjoch durch Schwenken des Schalthebels zu schwenken, wenn der Schalthebel in der Automatik-Schaltgasse ist, und dass er außer Eingriff mit dem Schaltjoch ist, wenn er sich in der manuellen Schaltgase befindet.

## Revendications

1. Ensemble sélecteur de vitesse pour un véhicule comprenant :
- une base (2) à fixer dans un véhicule,
- une fourche de sélecteur (10) présentant la forme d'un segment de disque et étant montée dans la base pour pouvoir pivoter autour d'un axe pivotant et comprenant un connecteur de câble (18) à une distance de son axe pivotant pour le raccordement d'un câble pour le transfert de mouvements de fourche de sélecteur pivotant à une transmission,
- un levier sélecteur (50) raccordé à la fourche de sélecteur pour pivoter la fourche de sélecteur le long d'une voie de changement de vitesses,
- un agencement de bras de verrouillage (20, 30) monté de manière pivotante sur la base et adapté pour coopérer avec des structures de surface de verrou (22, 32, 34) sur la fourche de sélecteur de sorte que l'agencement de bras de verrouillage bute contre les structures de surface de verrou pour bloquer le mouvement pivotant de la fourche de sélecteur dans une position pivotante prédéterminée lorsque l'agencement de bras de verrouillage est dans une position de verrouillage et que, lorsque l'agencement de bras de verrouillage est dans une position de déverrouillage pivotée loin des structures de surface de verrou, l'agencement de bras de verrouillage soit libre de passer les structures de surface de verrou pour permettre ainsi le mouvement pivotant de la fourche de sélecteur,
- un dispositif de sollicitation agissant sur l'agencement de bras de verrouillage en le poussant vers une des positions de verrouillage et déverrouillage,
- un actionneur magnétique (39, 29) adapté pour déplacer l'agencement de bras de verrouillage dans l'autre des positions de verrouillage et déverrouillage lorsque l'actionneur magnétique est activé,
**caractérisé en ce que**
- l'actionneur magnétique (39, 29) comprend un premier actionneur magnétique (39) et un second actionneur magnétique (29),
- l'agencement de bras de verrouillage (20, 30) comprend
un premier bras de verrouillage (30) mobile par ledit premier actionneur magnétique (39), dans lequel lorsque ledit premier actionneur magnétique (39) est activé, le premier bras de verrouillage (30) est dans sa position de déverrouillage, et
un second bras de verrouillage (20) mobile par ledit second actionneur magnétique (29), dans lequel lorsque ledit second actionneur magnétique (29) est activé, le second bras de verrouillage (20) est dans sa position de déverrouillage, et
- les structures de surface de verrou comprennent une première surface de verrou (32, 34) et une deuxième surface de verrou (22), et
- le premier bras de verrouillage (30) et la première surface de verrou (32, 34) sont agencés pour, lorsque le premier bras de verrouillage est dans la position de verrouillage et lorsque la fourche de sélecteur est dans une première position pivotante prédéterminée, bloquer le mouvement pivotant de la fourche de sélecteur dans une première direction seulement, et que le second bras de verrouillage (20) et la deuxième surface de verrou (22) sont agencés pour, lorsque le second bras de verrouillage est dans la position de verrouillage et lorsque la fourche de sélecteur est dans une deuxième position pivotante prédéterminée, bloquer le pivotement de la fourche de sélecteur dans une seconde direction seulement qui est opposée à la première direction.

2. Ensemble sélecteur de vitesse selon la revendication 1, **caractérisé en ce que** la première surface de verrou (32, 34) est formée par une projection sur la périphérie extérieure de la fourche de sélecteur (10) comme une surface avant s'étendant radialement de la projection s'étendant dans la direction radiale de la fourche de sélecteur par rapport à son axe pivotant, et **en ce que** le premier bras de verrouillage (30) est monté de manière pivotante dans la base dans un premier palier (31) à une distance radiale supérieure à la distance radiale de la projection par rapport à l'axe pivotant de la fourche de sélecteur de sorte que l'extrémité du premier bras de verrouillage opposée à son montage pivotant soit en butée contre la première surface de verrou (32, 34) lorsque le premier bras de verrouillage (30) est dans la position de verrouillage, et de sorte que cette extrémité du premier bras de verrouillage soit dans la position déverrouillée pivotée radialement plus loin de l'axe pivotant de la fourche de sélecteur de sorte que la première surface de verrou (32, 34) puisse passer le premier bras de verrouillage dans la position de déverrouillage.

3. Ensemble sélecteur de vitesse selon la revendication 1 ou 2, **caractérisé en ce que** le premier bras de verrouillage (30) s'étend dans la position de verrouillage perpendiculaire à la première surface de verrou (32, 34) et parallèle à une tangente sur la périphérie du segment de disque de la fourche de sélecteur (10).

4. Ensemble sélecteur de vitesse selon l'une quelconque des revendications précédentes, **caractérisé en ce que** le second bras de verrouillage (20) est monté de manière pivotante dans la base dans un second palier (21) à une distance radiale par rapport à l'axe pivotant de la fourche de sélecteur qui est inférieure à la distance radiale de la périphérie de la fourche de sélecteur (10), et s'étend dans un évidement (18) dans une surface latérale de la fourche de sélecteur (10), les parois latérales (16) entourant l'évidement étant dotées d'une projection formant la deuxième surface de verrou (22) s'étendant dans la direction radiale par rapport à l'axe pivotant de la fourche de sélecteur, dans lequel le second bras de verrouillage (20) comprend une tête étendue (26) à l'extrémité opposée au second palier (21), laquelle tête étendue est agencée pour être déplacée sur la deuxième surface de verrou (22) dans une position de fourche de sélecteur pivotante prédéterminée pour bloquer la rotation de la fourche de sélecteur (10) dans la seconde direction.

5. Ensemble sélecteur de vitesse selon la revendication 4, **caractérisé en ce que** des parois latérales (16) de l'évidement (18) sont dotées d'une troisième surface de verrou (24) qui est agencée pour coopérer avec la tête (26) du second bras de verrouillage (20) lorsque le second bras de verrouillage est dans sa position de déverrouillage pour bloquer l'autre rotation de la fourche de sélecteur dans la seconde direction dans une troisième position pivotante prédéterminée de la fourche de sélecteur.

6. Ensemble sélecteur de vitesse selon la revendication 4 ou 5, **caractérisé en ce que** la deuxième surface de verrou (22) est une surface s'étendant radialement d'une extension transversale de l'évidement, et **en ce que** le second bras de verrouillage (20) s'étend dans la position de verrouillage perpendiculaire à la deuxième surface de verrou et parallèle à une tangente sur la périphérie du segment de disque de la fourche de sélecteur.

7. Ensemble sélecteur de vitesse selon les revendications 2 et 4 ou les revendications 3 et 4, **caractérisé en ce que** le premier palier (31) du premier bras de verrouillage (30) et le second palier (21) du second bras de verrouillage (20) sont disposés lorsqu'ils sont vus depuis l'axe pivotant de la fourche de sélecteur (10), selon des angles polaires par rapport à l'axe pivotant qui diffèrent de moins de 15°.

8. Ensemble sélecteur de vitesse selon l'une quelconque des revendications 4 à 7, **caractérisé en ce qu'**une paroi inférieure (19) de l'évidement (18) est dotée d'une piste de guidage en saillie (36) et **en ce que** le second bras de verrouillage (20) comprend un axe élastique (28) s'étendant vers la paroi inférieure (19) de l'évidement (18) dans la zone entourée par la piste de guidage en saillie (36), la piste de guidage en saillie étant agencée de sorte que l'axe élastique touche la piste de guidage en saillie avant que le second bras de verrouillage (20) n'atteigne une portion de la paroi latérale (16) entourant l'évidement (18) afin de ralentir le mouvement du second bras de verrouillage par rapport à la paroi latérale pour amortir l'impact du second bras de verrouillage sur la paroi latérale.

9. Ensemble sélecteur de vitesse selon l'une quelconque des revendications 4 à 8, **caractérisé en ce qu'**il y a des évidements symétriques (18) sur les deux surfaces latérales opposées du segment de disque de la fourche de sélecteur (10) et **en ce que** le second bras de raccordement (20) comprend deux portions de bras de verrouillage symétriques (25) raccordées par une portion de tige (23) disposée en dehors des évidements, laquelle portion de tige est montée de manière pivotante dans le second palier dans la base, chaque portion de bras de verrouillage s'étendant dans un des évidements.

10. Ensemble sélecteur de vitesse selon la revendication 2 ou l'une quelconque des revendications 3 à 9 en combinaison avec la revendication 2, **caractérisé en ce que** le premier palier (31) est agencé pour plier élastiquement dans la base lorsqu'un couple seuil exercé sur la fourche de sélecteur dans la première direction est excédé, dans lequel un premier support de protection de surcharge est disposé dans la base de sorte que le premier bras de verrouillage bute contre le premier support de protection de surcharge et soit supporté par celui-ci lorsque le premier palier est plié suite à un couple dans la première direction supérieur au couple seuil.

11. Ensemble sélecteur de vitesse selon la revendication 4 ou l'une quelconque des revendications 5 à 10 en combinaison avec la revendication 4, **caractérisé en ce que** le second palier (21) est agencé pour plier élastiquement dans la base lorsqu'un couple seuil exercé sur la fourche de sélecteur (10) dans la seconde direction est excédé, dans lequel un second support de protection de surcharge (44) est disposé dans la base de sorte que le second bras de verrouillage bute contre le second support de protection de surcharge (44) et soit supporté par celui-ci lorsque le second palier (21) est plié suite à un couple dans la seconde direction supérieur au couple seuil.

12. Ensemble sélecteur de vitesse selon la revendication 8 ou l'une quelconque des revendications 9 à 11 en combinaison avec la revendication 8, **caractérisé en ce que** la piste de guidage en saillie (36) est dotée d'une portion de surface de guidage (38) qui pivote le second bras de verrouillage lorsque l'axe élastique (28) du second bras de verrouillage (20) coulisse le long de la portion de surface de guidage (27) de la piste de guidage lorsque la fourche de sélecteur pivote entre des positions de sélection de vitesse.

13. Ensemble sélecteur de vitesse selon l'une quelconque des revendications précédentes, **caractérisé en ce que** la voie de changement de vitesses est une voie de changement de vitesses d'une transmission automatique présentant une séquence de positions de sélection P, R, N, D, et **en ce que** la première surface de verrou comprend deux premières surfaces de verrou (32, 34), une pour le blocage dans la position R contre la rotation dans la première direction dans la position P, et une pour le blocage de la fourche de sélecteur dans la position N contre la rotation dans la première direction dans la position R lorsque le premier bras de verrouillage (30) est dans la position de verrouillage.

14. Ensemble sélecteur de vitesse selon les revendications 5 et 13, **caractérisé en ce que** la deuxième surface de verrou (22) est agencée pour bloquer la fourche de sélecteur dans la position P contre la rotation dans la seconde direction dans la position R par le second bras de verrouillage (20) lorsqu'il est dans la position de verrouillage, et que la troisième surface de verrou (24) est agencée pour bloquer la fourche de sélecteur dans la position N contre la rotation dans la seconde direction dans la position D par le second bras de verrouillage (20) lorsqu'il est dans la position de déverrouillage.

15. Ensemble sélecteur de vitesse selon la revendication 13, **caractérisé en ce que** le levier sélecteur est monté pour pouvoir pivoter par rapport à la fourche de sélecteur autour d'un second axe pivotant perpendiculaire au premier axe pivotant pour déplacer le levier sélecteur de la voie de changement de vitesses automatique à une voie de changement de vitesses manuel et vice versa, dans lequel le raccordement du levier sélecteur avec la fourche de sélecteur est tel que le levier sélecteur soit en prise avec la fourche de sélecteur pour être apte à pivoter la fourche de sélecteur par pivotement du levier sélecteur lorsque le levier sélecteur est dans la voie de changement de vitesses automatique, et soit hors prise de la fourche de sélecteur lorsqu'il est dans la voie de changement de vitesses manuel.
